# EUROPÄISCHE PATENTSCHRIFT

(11) **EP 3 242 821 B1**
(45) Veröffentlichungstag und Bekanntmachung des Hinweises auf die Patenterteilung: **10.06.2020**
(21) Anmeldenummer: 15817881.4
(22) Anmeldetag: 28.12.2015
(51) Int. Cl.: B60W 20/15, B60W 10/06, B60W 10/08

(54) **VERFAHREN UND VORRICHTUNG ZUM BETREIBEN EINES KRAFTFAHRZEUGS, KRAFTFAHRZEUG GEMÄSS DEM FÜLLSTAND DES KRAFTSTOFFTANKS**
METHOD AND DEVICE FOR OPERATING A MOTOR VEHICLE ACCORDING TO THE FILLING LEVEL OF THE FUEL TANK
PROCÉDÉ ET DISPOSITIF POUR FAIRE FONCTIONNER UN VÉHICULE AUTOMOBILE, VÉHICULE AUTOMOBILE SELON LE NIVEAU DU RÉSERVOIR DE CARBURANT

(30) Priorität: 08.01.2015 DE 102015200120
(43) Veröffentlichungstag der Anmeldung: 15.11.2017
(73) Patentinhaber: Robert Bosch GmbH, 70442 Stuttgart (DE)
(72) Erfinder: MUENZENMAY, Micha, 70329 Stuttgart (DE); KAEFER, Oliver, 71711 Murr (DE)
(86) Internationale Anmeldenummer: PCT/EP2015/081268
(87) Internationale Veröffentlichungsnummer: WO 2016/110428

(56) Entgegenhaltungen:
- EP-A1- 2 778 001
- DE-A1-102007 042 351
- DE-A1-102009 008 273
- JP-A- 2008 201 170

## Beschreibung

Die Erfindung betrifft ein Verfahren zum Betreiben eines Kraftfahrzeugs, insbesondere Nutzkraftwagen, das eine Hybridantriebsvorrichtung aufweist, mit einer Brennkraftmaschine, der ein Kraftstofftank zugeordnet ist, wobei ein Füllstand des Kraftstofftanks überwacht wird, und mit wenigstens einer weiteren Antriebsmaschine, der ein Energiespeicher zugeordnet ist.

Ferner betrifft die Erfindung eine Vorrichtung zum Betreiben eines derartigen Kraftfahrzeugs sowie ein entsprechendes Kraftfahrzeug.

### Stand der Technik

Zum Erreichen zukünftiger Emissionsziele und zur Senkung des Verbrauchs werden vermehrt Kraftfahrzeuge mit Hybridantriebsvorrichtungen versehen. Dabei wird eine Brennkraftmaschine mit einer elektrischen, hydraulischen oder pneumatischen Antriebsmaschine kombiniert. So ist es beispielsweise bekannt, eine elektrische Maschine zwischen Brennkraftmaschine und Getriebe anzuordnen, sodass die Brennkraftmaschine und die elektrische Maschine gleichzeitig auf den Getriebeeingang und somit auf den Antriebsstrang ein Drehmoment ausüben können. Die elektrische Maschine kann dabei generatorisch oder motorisch betrieben werden. Die Vorgabe der Sollmomente oder auch der Solldrehzahl für Brennkraftmaschine und elektrische Maschine werden in einer Betriebsstrategie durch ein Steuergerät berechnet. Dabei entscheidet das Steuergerät in Abhängigkeit unterschiedlicher Parameter, ob die Brennkraftmaschine, die elektrische Maschine oder ob beide Antriebsmaschinen ein Drehmoment erbringen sollen.

Weiterhin ist es bekannt, den Füllstand des Kraftstofftanks mittels einer entsprechenden Füllstandsmesseinrichtung zu überwachen, um beispielsweise dann, wenn der aktuelle Füllstand einen vorgebbaren Mindestwert unterschreitet, den Fahrer darauf aufmerksam zu machen, dass dieser die nächste Tankstelle ansteuern sollte.

Die Offenlegungsschrift EP 2 778 001 A1 beschreibt bereits ein Hybridfahrzeug, welches eine Brennkraftmaschine, einen Elektromotor und einen Kraftstofftank aufweist, wobei ein Füllstand des Kraftstofftanks überwacht wird. Wenn erfasst wird, dass der Füllstand kleiner oder gleich einem vorgegebenen Wert ist, so wird das Hybridfahrzeug nur durch den Elektromotor betrieben. Aus der Druckschrift JP 2008 201170 A geht ein ähnliches Hybridfahrzeug hervor. Die Offenlegungsschrift DE 10 2007 042351 A1 beschreibt ein Verfahren zur Ermittlung einer noch zurücklegbaren Wegstrecke für ein Fahrzeug mit wenigstens zwei Antriebsmodi, wobei ein erster Antriebsmodus durch eine Brennkraftmaschine und ein zweiter Antriebsmodus durch eine elektrische Maschine realisiert wird. Die Ermittlung der noch zurücklegbaren Wegstrecke erfolgt dann, wenn ein Ausfall eines Antriebsmodus vorliegt, beispielweise weil ein Kraftstofftank des Fahrzeugs keinen Kraftstoff mehr aufweist.

### Offenbarung der Erfindung

Das erfindungsgemäße Verfahren mit den Merkmalen des Anspruchs 1 hat den Vorteil, dass die Wahrscheinlichkeit, dass das Kraftfahrzeug aufgrund Kraftstoffmangels liegen bleibt, verringert wird. Erfindungsgemäß ist hierzu vorgesehen, dass, wenn erfasst wird, dass der Füllstand einen vorgebbaren, insbesondere den zuvor genannten Mindestfüllstand unterschreitet, das Kraftfahrzeug solange nur durch die weitere Antriebsmaschine angetrieben oder weitergetrieben wird, bis die durch den Energiespeicher zur Verfügung gestellte Energie nahezu aufgebraucht oder aufgebraucht ist. Wird also erkannt, dass der Kraftstoff zur Neige geht, weil der aktuelle Füllstand dem Mindestfüllstand unterschreitet, so wird das Kraftfahrzeug in einen Reservebetrieb geschaltet, in welchem es nur noch durch die weitere Antriebsmaschine betrieben wird. Dadurch wird erreicht, dass der in dem Kraftstofftank verbliebene Kraftstoff möglichst lange aufbewahrt wird. Insbesondere bei Fahrzeugen, bei denen die weitere Antriebsmaschine nicht dazu ausgebildet ist, das Kraftfahrzeug aus dem Stand anzufahren, weil hierfür die zur Verfügung stehende Leistung der weiteren Antriebsmaschine nicht ausreicht, wird gewährleistet, dass das Kraftfahrzeug solange wie möglich durch die weitere Antriebsmaschine betrieben wird, sodass für jeden Anfahrvorgang Kraftstoff zum Betreiben der Brennkraftmaschine zur Verfügung steht, bis das Kraftfahrzeug eine Tankstelle erreicht hat. Insbesondere ist daher vorgesehen, dass das Kraftfahrzeug durch die weitere Antriebsmaschine im Reservebetrieb nur weitergetrieben wird, für Anfahrvorgänge jedoch die Brennkraftmaschine hinzugeschaltet wird. Unterschreitet der Füllstand den vorgebbaren Mindestfüllstand, wird das Kraftfahrzeug also solange nur durch die weitere Antriebsmaschine weitergetrieben, bis auch die zum Betrieb der weiteren Antriebsmaschine zur Verfügung gestellte Energie des Energiespeichers aufgebraucht ist. Erst dann wird zurück in den Brennkraftbetrieb geschaltet. Durch das erfindungsgemäße Verfahren werden die Vorgaben zum Betreiben der Hybridantriebsvorrichtung im Normalbetrieb, wenn also der Füllstand den Mindestfüllstand überschreitet, nicht berücksichtigt.

Gemäß einer vorteilhaften Weiterbildung der Erfindung ist vorgesehen, dass wenn erfasst wird, dass der Füllstand den Mindestfüllstand überschreitet, die Brennkraftmaschine und die weitere Antriebsmaschine in Abhängigkeit von einer bestmöglichen Schadstoffemissionsbilanz betrieben werden. Im Normalbetrieb ist also vorgesehen, dass Brennkraftmaschine und die weitere Antriebsmaschine derart betrieben werden, dass das Kraftfahrzeug eine möglichst gute Schadstoffbilanz aufweist, Schadstoffemissionen also soweit wie möglich vermieden werden. Dazu werden im Normalbetrieb die Brennkraftmaschine und die weitere Antriebsmaschine beispielsweise in ihren in der aktuellen Fahrsituation bestmöglichen Betriebspunkten betrieben.

Ferner ist bevorzugt vorgesehen, dass die Schadstoffbilanz in Abhängigkeit von aktuellen Fahrparametern und/oder einer vorbestimmten Fahrstrategie ermittelt wird. Es ist also vorgesehen, dass die Schadstoffbilanz in Abhängigkeit von aktuellen Fahrparametern bestimmt wird, sodass auch der Betrieb der Brennkraftmaschine und der weiteren Antriebsmaschine in Abhängigkeit von aktuellen Fahranforderungen bestimmt werden. Wird beispielsweise ein besonders hohes Drehmoment angefordert, wird zu der Brennkraftmaschine die elektrische Maschine zugeschaltet. Wird für den Fahrbetrieb nur ein geringes Drehmoment benötigt, wird beispielsweise die Brennkraftmaschine abgeschaltet. Alternativ oder zusätzlich ist vorgesehen, dass die Schadstoffbilanz in Abhängigkeit von einer vorbestimmten Fahrstrategie ermittelt wird. Dazu wird insbesondere ein vorgebbares Fahrziel berücksichtigt, in Abhängigkeit dessen eine zu befahrende Strecke des Kraftfahrzeugs vorab analysiert wird, um für diese Strecke in Bezug auf die Schadstoffbilanz eine optimale Betriebsstrategie für die Hybridantriebsvorrichtung zu bestimmen.

Weiterhin ist bevorzugt vorgesehen, dass im Normalbetrieb der Energiespeicher maximal bis zu einem vorgebbaren Grenzwert entladen wird. Insbesondere bei elektrischen Energiespeichern kann die Lebensdauer des Energiespeichers dadurch optimiert werden, dass ein unterer Grenzwert, die sogenannte Entladungsgrenze, nicht unterschritten wird, um den Energiespeicher nicht zu überanspruchen. Wird jedoch der Reservebetrieb eingestellt, wird der vorgebbare Grenzwert ignoriert und der Energiespeicher weiter entladen.

Erfindungsgemäß ist vorgesehen, dass im Reservebetrieb nur dann die Brennkraftmaschine betrieben wird, wenn ein durch die weitere Antriebsmaschine bereitstellbares Antriebsdrehmoment niedriger als ein Mindestanfahrdrehmoment ist. Wie oben bereits erwähnt, wird hierdurch gewährleistet, dass dann, wenn die weitere Antriebsmaschine nicht dazu in der Lage ist, das Kraftfahrzeug anzufahren, die Brennkraftmaschine hinzugeschaltet wird. Dies ist insbesondere bei Nutzfahrzeugen der Fall, bei welchen eine elektrische Maschine als weitere Antriebsmaschine im regulären Fahrbetrieb nur zum Weitertreiben des Nutzfahrzeugs genutzt wird.

Gemäß einer vorteilhaften Weiterbildung der Erfindung ist vorgesehen, dass die weitere Antriebsmaschine elektrisch, hydraulisch oder pneumatisch betrieben wird. Das vorgeschlagene Verfahren kann also in unterschiedlichen Antriebskonzepten durchgeführt werden. Auch ist es denkbar, dass die Antriebsvorrichtung neben der Brennkraftmaschine mehr als nur eine weitere Antriebsmaschine, gegebenenfalls auch zwei unterschiedliche weitere Antriebsmaschinen aufweist.

Die erfindungsgemäße Vorrichtung mit den Merkmalen des Anspruchs 7 zeichnet sich dadurch aus, dass das Steuergerät bei bestimmungsgemäßem Gebrauch das erfindungsgemäße Verfahren durchführt. Es ergeben sich hierdurch die zuvor bereits genannten Vorteile.

Das erfindungsgemäße Kraftfahrzeug mit den Merkmalen des Anspruchs 8 zeichnet sich durch die erfindungsgemäße Vorrichtung aus. Auch hier ergeben sich die zuvor bereits genannten Vorteile. Weitere Merkmale und Vorteile ergeben sich aus dem zuvor beschriebenen sowie aus den Ansprüchen.

Im Folgenden soll die Erfindung anhand der Zeichnungen näher erläutert werden. Dazu zeigen
- Figur 1: ein Kraftfahrzeug in einer vereinfachten Darstellung, und
- Figur 2: ein Verfahren zum Betreiben des Kraftfahrzeugs.

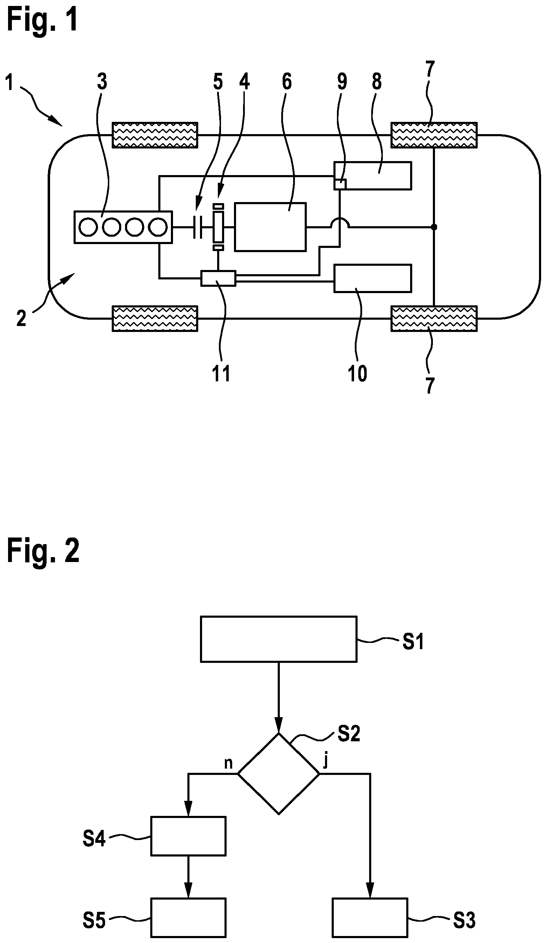

Figur 1 zeigt ein Kraftfahrzeug 1 in einer vereinfachten Darstellung, das als Nutzkraftwagen ausgebildet ist. Das Kraftfahrzeug 1 weist dazu eine Antriebsvorrichtung 2 auf, die eine Brennkraftmaschine 3 sowie eine elektrische Maschine 4 als weitere Antriebsmaschine aufweist. Die Brennkraftmaschine 3 ist durch eine betätigbare Kupplung 5 mit der Rotorwelle der elektrischen Maschine 4 wirkverbindbar. Die Rotorwelle 4 ist außerdem mit der Getriebeeingangswelle eines Getriebes 6 verbunden, das ausgangsseitig mit Antriebsrädern 7 des Kraftfahrzeugs 1 in Wirkverbindung steht.

Der Brennkraftmaschine 3 ist ein Kraftstofftank 8 zugeordnet, der eine Füllstandsmesseinrichtung 9 aufweist. Die Füllstandsmesseinrichtung 9 ist dazu ausgebildet, den Füllstand des in dem Kraftstofftank 8 befindlichen Kraftstoffs zu überwachen. Vorzugsweise wird ein fossiler Kraftstoff für die Brennkraftmaschine 3 verwendet.

Der elektrischen Maschine 4 ist ein Energiespeicher 10 zugeordnet, der elektrisch aufladbar und entladbar ist, je nachdem, ob die elektrische Maschine 4 generatorisch oder motorisch betrieben wird.

Zum Betreiben der Hybridantriebsvorrichtung 1 ist ein Steuergerät 11 vorgesehen, das mit der Brennkraftmaschine 3, mit der elektrischen Maschine 4, mit dem Energiespeicher 10 und der Füllstandsmesseinrichtung 9 verbunden ist. Das Steuergerät 11 steuert den Betrieb des Kraftfahrzeugs 1, wie im Folgenden anhand von Figur 2 näher erörtert werden soll.

Figur 2 zeigt dazu ein vereinfachtes Flussdiagramm, anhand dessen der Betrieb erläutert werden soll. In einem ersten Schritt S1 wird das Kraftfahrzeug 1 in Betrieb genommen. Anschließend überwacht das Kraftfahrzeug kontinuierlich oder zumindest in regelmäßigen Zeitabständen mittels der Füllstandsmesseinrichtung 9 den aktuellen Füllstand des Kraftstofftanks 8 in einem Schritt S2. Dabei wird der erfasste Füllstand mit einem vorgebbaren Mindestfüllstand verglichen. Überschreitet der aktuelle Füllstand den Mindestfüllstand (j), so wird die Hybridantriebsvorrichtung 2 in einem darauffolgenden Schritt S3 in Abhängigkeit davon betrieben, dass das Kraftfahrzeug 1 insgesamt möglichst wenige Schadstoffemissionen erzeugt. Insbesondere wird die CO₂-Bilanz des Kraftfahrzeugs 1, insbesondere der Brennkraftmaschine 3, berücksichtigt, die sich durch aktuelle Fahrparameter und/oder eine Fahrstrategie des Kraftfahrzeugs 1, die beispielsweise in Abhängigkeit einer vorbekannten zu befahrenden Strecke ermittelt wurde. In diesem Normalbetrieb gemäß Schritt S3 wird die Hybridantriebsvorrichtung 2 also möglichst umweltschonend betrieben.

Wird in Schritt S2 jedoch erfasst, dass der aktuelle Füllstand des Kraftstofftanks 8 den Mindestfüllstand unterschreitet (n), wo wird das Kraftfahrzeug 1 beziehungsweise die Hybridantriebsvorrichtung 2 in einen Reservebetrieb in Schritt S4 geschaltet. In dem Reservebetrieb wird das Kraftfahrzeug 1 nur durch die elektrische Maschine 4 betrieben oder weiterbetrieben und die Brennkraftmaschine 3 insbesondere abgeschaltet. Dabei wird der Reservebetrieb derart lange aufrechterhalten, bis die von dem Energiespeicher 10 zur Verfügung gestellte Energie für den motorischen Betrieb der elektrischen Maschine 4 aufgebraucht ist. Erst dann wird in einem Schritt S5 in einen Brennkraftbetrieb geschaltet, in welchem das Kraftfahrzeug 1 nur noch durch die Brennkraftmaschine 3 angetrieben wird.

Durch das so durchgeführte Verfahren wird erreicht, dass ein Liegenbleiben des Kraftfahrzeugs 1 für lange Zeit vermieden und die Wahrscheinlichkeit, dass das Kraftfahrzeug 1 eine Tankstelle anfahren kann, maximiert wird.

In dem Reservebetrieb wird das Kraftfahrzeug 1, wie bereits gesagt, nur durch die elektrische Maschine 4 angetrieben. Sofern die elektrische Maschine 4 derart dimensioniert ist, dass sie das Kraftfahrzeug 1 aus dem Stillstand anfahren kann, also eine ausreichend hohe Leistung für ein Anfahrdrehmoment erbringen kann, so wird das Kraftfahrzeug 1 im Reservebetrieb nur durch die elektrische Maschine 4 betrieben.

Reicht das maximale Antriebsdrehmoment der elektrischen Maschine 4 nicht dazu aus, das Kraftfahrzeug 1 anzutreiben, so wird zum Anfahren die Brennkraftmaschine 3 in dem Reservebetrieb kurzzeitig hinzugeschaltet, um das Anfahren zu gewährleisten. Auf diese Weise ist das Kraftfahrzeug für lange Zeit mobil. Solange noch Restkraftstoff in dem Kraftstofftank 8 verbleibt, kann der Anfahrvorgang auch weiterhin durch die Brennkraftmaschine 3 gewährleistet werden, sodass die nächste Tankstelle angefahren werden kann. Alle anderen Regelungs- beziehungsweise Steuerverfahren der Hybridantriebsvorrichtung 2 werden in dem Reservebetrieb deaktiviert, sodass der Reservebetrieb einen Notbetrieb zum Erreichen der nächsten Tankstelle darstellt, wobei insbesondere auf Schadstoffemissionen des Kraftfahrzeugs 1 keine Rücksicht genommen wird. Im Reservebetrieb wird also eine betriebspunktabhängige und applizierbare Momentenanforderung an die weitere Antriebsmaschine gesendet und dadurch fossiler Kraftstoff mit dem Ziel der Reichweitenverlängerung eingespart.

## Patentansprüche

1. Verfahren zum Betreiben eines Kraftfahrzeugs (1), insbesondere Nutzkraftwagen, das eine Hybridantriebsvorrichtung (2) aufweist, mit einer Brennkraftmaschine (3), der ein Kraftstofftank (8) zugeordnet ist, wobei ein Füllstand des Kraftstofftanks (8) überwacht wird, und mit wenigstens einer weiteren Antriebsmaschine (4), der ein Energiespeicher (10) zugeordnet ist, **dadurch gekennzeichnet, dass**, wenn erfasst wird, dass der Füllstand einen vorgebbaren Mindestfüllstand unterschreitet, die Brennkraftmaschine (3) abgeschaltet wird und das Kraftfahrzeug (1) solange nur durch die weitere Antriebsmaschine (4) angetrieben oder weitergetrieben wird, bis die durch den Energiespeicher (10) zur Verfügung gestellte Energie aufgebraucht oder nahezu aufgebraucht ist, wobei die Brennkraftmaschine (3) für einen Anfahrvorgang kurzzeitig hinzugeschaltet wird, wenn ein durch die weitere Antriebsmaschine (4) bereitstellbares Antriebsdrehmoment niedriger als ein Mindestanfahrdrehmoment des Kraftfahrzeugs (1) ist.

2. Verfahren nach Anspruch 1, **dadurch gekennzeichnet, dass**, wenn erfasst wird, dass der Füllstand den Mindestfüllstand überschreitet, die Brennkraftmaschine (3) und die weitere Antriebsmaschine (4) in Abhängigkeit von einer Schadstoffemissionsbilanz der Hybridantriebsvorrichtung (2) betrieben werden.

3. Verfahren nach Anspruch 2, **dadurch gekennzeichnet, dass** die Schadstoffemissionsbilanz in Abhängigkeit von aktuellen Fahrparametern und/oder von einer vorbestimmten Fahrstrategie ermittelt wird.

4. Verfahren nach einem der vorhergehenden Ansprüche, **dadurch gekennzeichnet, dass** im Normalbetrieb der Energiespeicher (10) maximal bis zu einem vorgebbaren Grenzwert entladen wird.

5. Verfahren nach einem der vorhergehenden Ansprüche, **dadurch gekennzeichnet, dass** die weitere Antriebsmaschine (4) elektrisch, hydraulisch oder pneumatisch betrieben wird.

6. Vorrichtung zum Betreiben eines Kraftfahrzeugs (1), insbesondere Nutzkraftwagen, das eine Hybridantriebsvorrichtung (2) aufweist, mit einer Brennkraftmaschine, der ein Kraftstofftank (8) zugeordnet ist, und mit einer weiteren Antriebsmaschine (4), der ein Energiespeicher (10) zugeordnet ist, mit einer dem Kraftstofftank (8) zugeordneten Füllstandserfassungseinrichtung (9), und mit einem Steuergerät (11), das die Brennkraftmaschine (3) und die weitere Antriebsmaschine (4) ansteuert, **dadurch gekennzeichnet, dass** das Steuergerät (11) das Verfahren nach einem der Ansprüche 1 bis 5 durchführt.

7. Kraftfahrzeug (1), insbesondere Nutzkraftwagen, mit einer Hybridantriebsvorrichtung (2), die eine Brennkraftmaschine (3), der ein Kraftstofftank (8) zugeordnet ist, und eine wenigstens eine weitere Antriebmaschine (4), der ein Energiespeicher (10) zugeordnet ist, aufweist, mit einer dem Kraftstofftank (8) zugeordneten Füllstandserfassungseinrichtung (9) und mit einer Vorrichtung nach Anspruch 6.

## Claims

1. Method for operating a motor vehicle (1), in particular utility motor vehicle, which has a hybrid drive apparatus (2), having an internal combustion engine (3) which is assigned a fuel tank (8), wherein a fill level of the fuel tank (8) is monitored, and having at least one further drive machine (4), which is assigned an energy store (10), **characterized in that**, if it is detected that the fill level is below a predefinable minimum fill level, the internal combustion engine (3) is shut down and the motor vehicle (1) is driven, or continues to be driven, only by means of the further drive machine (4) until such time as the energy provided by the energy store (10) has been completely consumed or almost completely consumed, wherein the internal combustion engine (3) is briefly activated for a launch process if a drive torque that can be provided by the further drive machine (4) is lower than a minimum launch torque of the motor vehicle (1).

2. Method according to Claim 1, **characterized in that**, if it is detected that the fill level is above the minimum fill level, the internal combustion engine (3) and the further drive machine (4) are operated in a manner dependent on a pollutant emissions balance of the hybrid drive apparatus (2).

3. Method according to Claim 2, **characterized in that** the pollutant emissions balance is ascertained in a manner dependent on present driving parameters and/or on a predetermined driving strategy.

4. Method according to any of the preceding claims, **characterized in that**, during normal operation, the energy store (10) is discharged at most to a predefinable limit value.

5. Method according to any of the preceding claims, **characterized in that** the further drive machine (4) is operated electrically, hydraulically or pneumatically.

6. Apparatus for operating a motor vehicle (1), in particular utility motor vehicle, which has a hybrid drive apparatus (2), having an internal combustion engine which is assigned a fuel tank (8), and having a further drive machine (4), which is assigned an energy store (10), having a fill level detection device (9), which is assigned to the fuel tank (8), and having a control unit (11), which controls the internal combustion engine (3) and the further drive machine (4), **characterized in that** the control unit (11) carries out the method according to any of Claims 1 to 5.

7. Motor vehicle (1), in particular utility motor vehicle, having a hybrid drive apparatus (2), which hybrid drive apparatus has an internal combustion engine (3), which is assigned a fuel tank (8), and having at least one further drive machine (4), which is assigned an energy store (10), having a fill level detection device (9), which is assigned to the fuel tank (8), and having an apparatus according to Claim 6.

## Revendications

1. Procédé pour faire fonctionner un véhicule automobile (1), en particulier un véhicule utilitaire, qui présente un dispositif d'entraînement hybride (2), avec un moteur à combustion interne (3) auquel est associé un réservoir de carburant (8), un niveau de remplissage du réservoir de carburant (8) étant surveillé, et comprenant au moins une machine d'entraînement supplémentaire (4) à laquelle est associé un accumulateur d'énergie (10), **caractérisé en ce que** lorsque l'on détecte que le niveau de remplissage passe en dessous d'un niveau de remplissage minimal prédéfinissable, le moteur à combustion interne (3) est coupé et le véhicule automobile (1) est entraîné ou continue d'être entraîné seulement par la machine d'entraînement supplémentaire (4) jusqu'à ce que l'énergie fournie par l'accumulateur d'énergie (10) soit épuisée ou presque épuisée, le moteur à combustion interne (3) étant brièvement remis en route pour une opération de démarrage lorsqu'un couple d'entraînement pouvant être fourni par la machine d'entraînement supplémentaire (4) est inférieur à un couple de démarrage minimal du véhicule automobile (1).

2. Procédé selon la revendication 1, **caractérisé en ce que** lorsque l'on détecte que le niveau de remplissage dépasse le niveau de remplissage minimal, le moteur à combustion interne (3) et la machine d'entraînement supplémentaire (4) sont commandés en fonction d'un bilan d'émissions nocives du dispositif d'entraînement hybride (2).

3. Procédé selon la revendication 2, **caractérisé en ce que** le bilan d'émissions nocives est déterminé en fonction de paramètres de conduite actuels et/ou d'une stratégie de conduite prédéterminée.

4. Procédé selon l'une quelconque des revendications précédentes, **caractérisé en ce que** pendant un fonctionnement normal, l'accumulateur d'énergie (10) est déchargé au maximum jusqu'à une valeur limite prédéfinissable.

5. Procédé selon l'une quelconque des revendications précédentes, **caractérisé en ce que** la machine d'entraînement supplémentaire (4) est commandée électriquement, hydrauliquement ou pneumatiquement.

6. Dispositif pour faire fonctionner un véhicule automobile (1), en particulier un véhicule utilitaire, qui présente un dispositif d'entraînement hybride (2) avec un moteur à combustion interne, auquel est associé un réservoir de carburant (8) et avec une machine d'entraînement supplémentaire (4) à laquelle est associé un accumulateur d'énergie (10), avec un dispositif de détection de niveau de remplissage (9) associé au réservoir de carburant (8), et avec un appareil de commande (11) qui pilote le moteur à combustion interne (3) et la machine entraînement supplémentaire (4), **caractérisé en ce que** l'appareil de commande (11) met en œuvre le procédé selon l'une quelconque des revendications 1 à 5.

7. Véhicule automobile (1), en particulier véhicule utilitaire, comprenant un dispositif d'entraînement hybride (2) qui présente un moteur à combustion interne (3) auquel est associé un réservoir de carburant (8) et au moins une machine d'entraînement supplémentaire (4) à laquelle est associé un accumulateur d'énergie (10), avec un dispositif de détection de niveau de remplissage (9) associé au réservoir de carburant (8) et avec un dispositif selon la revendication 6.
